# EUROPÄISCHE PATENTSCHRIFT

(11) **EP 1 790 949 B1**
(45) Veröffentlichungstag und Bekanntmachung des Hinweises auf die Patenterteilung: **01.09.2010**
(21) Anmeldenummer: 06019236.6
(22) Anmeldetag: 14.09.2006
(51) Int. Cl.: G01D 5/04, G01D 5/244, G01D 5/08

(54) **Vorrichtung zur absoluten Messung der linearen oder rotatorischen Position eines Messobjektes**
Device for the absolute measurement of the linear or rotational position of an object to be measured
Dispositif de mesure absolue de la position linéaire ou rotative d'un objet de mesure

(30) Priorität: 29.11.2005 DE 102005057229
(43) Veröffentlichungstag der Anmeldung: 30.05.2007
(73) Patentinhaber: SICK STEGMANN GmbH, 78166 Donaueschingen (DE)
(72) Erfinder: Siraky, Josef, 78166 Donaueschingen (DE)
(74) Vertreter: Patentanwälte Westphal, Mussgnug & Partner

(56) Entgegenhaltungen:
- WO-A-03/008747
- DE-A1- 19 962 241

## Beschreibung

Die Erfindung betrifft eine Vorrichtung zur absoluten Messung der linearen oder rotatorischen Position eines Messobjektes gemäß dem Oberbegriff des Patentanspruchs 1.

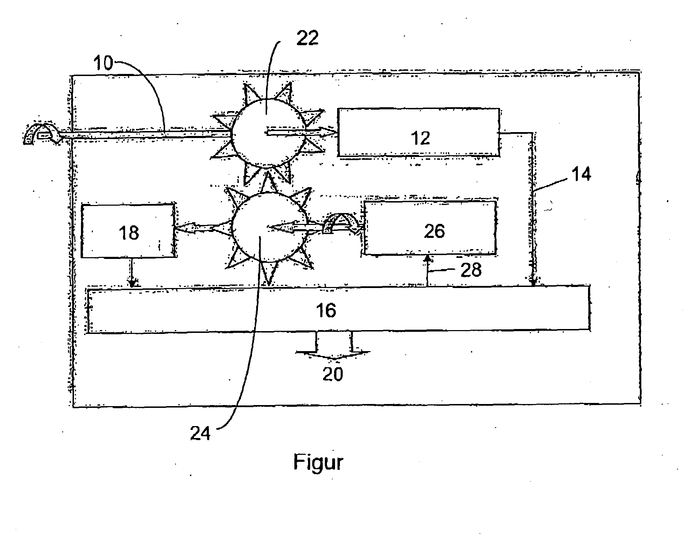

Zur Messung der linearen oder,rotatorischen Position eines Messobjektes ist es bekannt, mit dem Messobjekt eine Maßverkörperung zu koppeln, die durch eine Abtastung zyklisch abgetastet wird. Bei einem rotierenden Messobjekt kann auf diese Weise die absolute Position über mehrere Umdrehungen des Messobjektes erfasst werden. Bei einem linear bewegten Messobjekt kann eine sich periodisch wiederholende Maßverkörperung über mehrere Perioden abgetastet werden. Nach EP 1 437 575 A1 (Figur 12) wird hierzu eine Einheit verwendet, die die Position über mehrere abgetastete Zyklen codiert erfasst. Diese Codiereinheit weist hierzu ein Eingangsrad auf, welches durch eine mechanische Wirkverbindung mit dem Messobjekt gekoppelt ist. Die mechanische Wirkverbindung wird durch einen Zahneingriff realisiert. Bei einem rotierendem Messobjekt greift das als Zahnrad ausgebildete Eingangsrad in die Verzahnung eines mit dem Messobjekt rotierenden Zahnrades ein. Bei einem linear bewegten Messobjekt greift das als Zahnrad ausgebildete Eingangsrad in eine mit dem Messobjekt bewegte lineare Zahnleiste ein.

Bei diesen bekannten Vorrichtungen besteht ein Problem in dem Verschleiß der mechanischen Wirkverbindung, insbesondere der ineinander greifenden Verzahnungen. In vielen Anwendungsfällen ist dieses Problem insbesondere dadurch gravierend, dass der Verschleiß stark von der Zahnpaarung der Wirkverbindung abhängt. Je größer der Durchmesser des antreibenden Zahnrades im Vergleich zu dem Durchmesser des angetriebenen Eingangsrades ist, um so stärker ist der Verschleiß. Aus konstruktiven Gründen ist der Durchmesser der antreibenden Verzahnung häufig wesentlich größer als der Durchmesser des angetriebenen Eingangsrades. Der Durchmesser des antreibenden Zahnrades muss beispielsweise einen relativ großen Durchmesser haben, wenn dieses antreibende Zahnrad z.B. auf einem das Messobjekt bildenden Hohlwellenmotor angeordnet ist. Der Durchmesser des Eingangsrades der Zähleinheit;wird dagegen in der Regel klein gewählt, um die Bauabmessungen der Vorrichtung klein zu halten. Im Extremfalle eines linear bewegten Messobjektes entspricht die lineare Verzahnung einem unendlich großen Durchmesser des antreibenden Zahnrades.

Gemäß der EP 1 437 575 A1 wird das Problem des Verschleißes der ineinandergreifenden Zahnräder dadurch vermieden, dass die mechanische Wirkverbindung der Zahnräder durch eine magnetische Kopplung ersetzt wird.

Aus der WO 03/008747 A1 ist es bekannt, zur Messung der rotatorischen Position einer Welle ein Sensorrad mit einem Positionsgeber abzutasten, wobei das Sensorrad als Zahnrad ausgebildet ist, welches mit einer Verzahnung der Welle oder der Verzahnung eines von der Welle angetriebenen Abtriebsrades kämmt.

Der Erfindung liegt die Aufgabe zu Grunde, eine Vorrichtung mit codierter Erfassung der Position über mehrere abgetastete Zyklen zu schaffen, bei welcher das Verschleißproblem des Zahneingriffs bei der mechanischen Kopplung der Codiereinheit minimiert ist.

Diese Aufgabe wird erfindungsgemäß gelöst durch eine Vorrichtung mit den Merkmalen des Patentenanspruchs 1.

Vorteilhafte Ausführungen der Erfindung sind in den Unteransprüchen angegeben.

Der wesentliche Gedanke der Erfindung besteht darin, die mechanische Wirkverbindung für den Antrieb des Eingangsrades der Codiereinheit mit einem relativ großen mechanischen Spiel auszubilden und das Eingangsrad über einen eigenen elektrischen Motor anzutreiben. Der Antrieb des Eingangsrades durch diesen Motor wird dabei mittels der Abtastung der Maßverkörperung so mit der Bewegung des Messobjekts synchronisiert, dass sich die mechanische Wirkverbindung innerhalb dieses Spieles befindet und somit kein mechanischer Wirkeingriff stattfindet, der einen Verschleiß verursacht. Während des Betriebes der Vorrichtung ist somit die mechanische Wirkverbindung zwischen dem Messobjekt und dem Eingangsrad außer Funktion und das Eingangsrad wird ausschließlich durch den eigenen Motor angetrieben. Die mechanische Wirkverbindung wird durch die Synchronisierung dieses motorischen Antriebes ersetzt. Wird das Messobjekt bewegt, ohne dass die Vorrichtung eingeschaltet ist, so erfolgt auch kein Antrieb des Eingangsrades durch den elektrischen Motor. In diesem Falle kommt jedoch die mechanische Wirkverbindung mechanisch zum Eingriff und treibt das Eingangsrad und damit die Codiereinheit an. Die Codiereinheit erfasst dadurch in herkömmlicher Weise codiert die Zahl der Umdrehungen bzw. Zyklen, um die absolute Position bei einem folgenden Einschalten der Vorrichtung zu erfassen.

Im Folgenden wird die Erfindung anhand eines Ausführungsbeispieles näher erläutert, welches in der einzigen Figur der beigefügten Zeichnung schematisch dargestellt ist.

In der schematischen Darstellung soll die absolute Winkelposition eines Messobjektes 10 über mehrere Umdrehungen gemessen werden. Das Messobjekt 10 kann z.B. die Welle eines Stellmotors oder ein zu positionierendes rotierendes Objekt sein. Ebenso kann das Messobjekt 10 die Eingangswelle eines Positionsgebers sein, die mit einer solchen Welle oder einem zu positionierenden Objekt gekuppelt ist.

Mit dem Messobjekt 10 ist eine in der Zeichnung nicht dargestellte Maßverkörperung winkelfest gekuppelt. Die Maßverkörperung kann beispielsweise eine drehfest mit dem Messobjekt 10 verbundene Codescheibe sein, die optisch, magnetisch oder in sonstiger Weise abgetastet wird. Die Abtastung 12 erfasst dabei die Winkelposition der Maßverkörperung und damit des Messobjektes 10 absolut über eine Umdrehung der Maßverkörperung. Das Signal der Abtastung 12 wird über eine Signalleitung 14 einer elektronischen Auswertung 16 zugeführt.

Um die Winkelposition des Messobjektes 10 über mehrere Umdrehungen absolut erfassen zu können, ist eine Codiereinheit 18 vorgesehen, die die Umdrehungen des Messobjektes 10 bzw. der Maßverkörperung über ein Untersetzungsgetriebe codiert erfasst. Die codierte Information über die Zahl der Umdrehungen wird ebenfalls der Auswertung 16 zugeführt. In der Auswertung 16 werden die Informationen über die Position innerhalb eines Umdrehungszyklus und die Informationen über die Zahl der Umdrehungen zu dem absoluten Multiturn-Positionswert zusammengeführt, der dann über eine Schnittstelle 20 ausgegeben wird.

Insoweit entspricht die Vorrichtung dem bekannten Stand der Technik, so dass eine detaillierte Beschreibung nicht erforderlich ist.

Die Codiereinheit 18 ist mit dem Messobjekt 10 über eine mechanische Wirkverbindung gekoppelt. Hierzu ist mit dem Messobjekt 10 ein Zahnrad 22 drehfest verbunden. Mit diesem Zahnrad 22 steht ein als Zahnrad ausgebildetes Eingangsrad 24 der Codiereinheit 18 in Zahneingriff. Die Verzahnungen des Zahnrades 22 und des Eingangsrades 24 sind dabei so ausgebildet, dass der Zahneingriff ein relativ großes Spiel in Drehrichtung aufweist. Das Eingangsrad 24 ist durch einen eigenen elektrischen Motor 26 drehend antreibbar. Der Motor 26 wird durch die Auswertung 16 über eine Steuerleitung 28 in der Weise angesteuert, dass sich das Eingangsrad 24 synchron mit dem Zahnrad 22 dreht. Für diese Synchronisierung werden die Abtastsignale der Abtastung 12 verwendet.

Bei Betrieb der Vorrichtung, wenn die Abtastung 12, die Auswertung 16 und der Motor 26 in Funktion sind, wird durch die Synchronisierung der Drehung des Eingangsrades 24 und des Zahnrades 22 und durch das relativ große Zahnspiel erreicht, dass die Verzahnungen des antreibenden Zahnrades 22 und des angetriebenen Eingangsrades 24 nicht zur Übertragung eines Antriebsdrehmoments in Eingriff kommen und somit praktisch kein Verschleiß der Verzahnungen auftritt.

Wird das Messobjekt 10 verstellt, ohne dass die Vorrichtung in Betrieb ist, so werden mit dem Messobjekt 10 auch die Maßverkörperung und das Zahnrad 22 gedreht. Das Zahnrad 22 nimmt dabei über den mechanischen Zahneingriff das Eingangsrad 24 mit, das in diesem Falle nicht durch den abgeschalteten Motor 26 angetrieben wird. Durch den mechanischen Zahneingriff zwischen dem Zahnrad 22 und dem Eingangsrad 24 wird die Codiereinheit 18 betätigt und erfasst die Umdrehungen des Messobjektes 10 in codierter Form. Bei einem späteren Einschalten der Vorrichtung steht somit die über mehrere Umdrehungen gemessene absolute Winkelposition sofort an der Schnittstelle 20 zur Verfügung.

Es ist ohne Weiteres ersichtlich, dass die Erfindung in gleicher Weise verwendet werden kann, wenn das Messobjekt 10 nicht ein rotierendes Messobjekt ist, sondern ein sich linear bewegendes Messobjekt. In diesem Falle kann die Maßverkörperung linear angeordnet sein, wobei sich die absoluten Positionswerte periodisch wiederholen und bei der Abtastung zyklisch aufeinander folgen. Die Codiereinheit 18 dient dabei zur absoluten codierten Erfassung der abgetasteten Zyklen.

Bei einer solchen Anwendung der Erfindung wird anstelle eines rotierenden Zahnrades 22 eine lineare Verzahnung verwendet, z.B. in Form einer mit dem Messobjekt verbundenen Zahnleiste, in welche dann das Eingangsrad 24 mit einem entsprechenden Spiel der Verzahnung eingreift.

### Bezugszeichenliste

- 10: Messobjekt
- 12: Abtastung
- 14: Signalleitung
- 16: elektronische Auswertung
- 18: Codiereinheit
- 20: Schnittstelle
- 22: Zahnrad
- 24: Eingangsrad
- 26: Motor
- 28: Steuerleitung

## Patentansprüche

1. Vorrichtung zur absoluten Messung der linearen oder rotatorischen Position eines Messobjektes, mit einer mit dem Messobjekt (10) gekoppelten Maßverkörperung, die zyklisch mittels einer Abtastung (12) abgetastet wird, und mit einer die Position über mehrere abgetastete Zyklen der Maßverkörperung erfassenden Codiereinheit (18), wobei die Codiereinheit (18) ein als Zahnrad ausgebildetes Eingangsrad (24) aufweist, welches zur mechanischen Wirkverbindung in eine mit dem Messobjekt (10) gekoppelte Verzahnung eingreift,
**dadurch gekennzeichnet, dass** die mechanische Wirkverbindung mit Zahnspiel ausgebildet ist, dass das Eingangsrad (24) durch einen elektrischen Motor (26) antreibbar ist und dass der Motor (26) durch die Abtastung (12) der Maßverkörperung gesteuert das Eingangsrad (24) synchron mit dem Messobjekt (10) antreibt, so dass sich die Wirkverbindung innerhalb des Zahnspieles ohne mechanischen Wirkeingriff befindet.

2. Vorrichtung nach Anspruch
**dadurch gekennzeichnet, dass** der Durchmesser der Verzahnung des Eingangsrades (24) kleiner ist als der Durchmesser der mit dem Messobjekt (10) gekoppelten Verzahnung.

3. Vorrichtung nach Anspruch 2,
**dadurch gekennzeichnet, dass** das Messobjekt (10) ein rotierendes Messobjekt ist, mit welchem ein Zahnrad (22) für die Wirkverbindung gekoppelt ist.

4. Vorrichtung nach Anspruch 2,
**dadurch gekennzeichnet, dass** das Messobjekt ein sich linear bewegendes Messobjekt ist, mit welchem eine lineare Verzahnung für die mechanische Wirkverbindung gekoppelt ist.

## Claims

1. A device for the absolute measurement of the linear or rotational position of an object to be measured, with a solid measure which is coupled to the object to be measured (10) and which is scanned cyclically by means of a scanning device (12), and with an encoding unit (18) which detects the position by way of a plurality of scanned cycles of the solid measure, wherein the encoding unit (18) has an input wheel (24) which is designed in the form of a toothed wheel and which engages in a set of teeth coupled to the object to be measured (10) for a mechanical operative connection, **characterized in that** the mechanical operative connection is produced with tooth clearance, the input wheel (24) is capable of being driven by an electric motor (26), and the motor (26) drives the input wheel (24) in synchronism with the object to be measured (10) in a manner controlled by the scanning device (12) of the solid measure, so that the operative connection is present within the tooth clearance without mechanical operative engagement.

2. A device according to claim 1, **characterized in that** the diameter of the set of teeth of the input wheel (24) is smaller than the diameter of the set of teeth coupled to the object to be measured (10).

3. A device according to claim 2, **characterized in that** the object to be measured (10) is a rotating object to be measured to which a toothed wheel (22) for the operative connection is coupled.

4. A device according to claim 2, **characterized in that** the object to be measured is an object to be measured which moves in a linear manner and to which a linear set of teeth for the operative connection is coupled.

## Revendications

1. Dispositif de mesure absolue de la position linéaire ou de rotation d'un objet de mesure comprenant :
- une représentation de la mesure couplée à l'objet de mesure (10), cette représentation étant détectée cycliquement par un dispositif de détection (12), et
- une unité de codage (18) saisissant la position de la représentation de mesure détectée sur plusieurs cycles,
- l'unité de codage (18) comportant une roue d'entrée (24) réalisée sous la forme de roue dentée, coopérant mécaniquement par engrènement avec une denture couplée à l'objet de mesure (10),
**caractérisé en ce que**
- la liaison de coopération mécanique est faite avec du jeu d'engrènement,
- la roue d'entrée (24) est entraînée par un moteur électrique (26), et
- le moteur (26) est commandé par le dispositif de détection (12) de la représentation de la mesure, pour entraîner la roue d'entrée (24) en synchronisme avec l'objet de mesure (10) pour que la coopération dans le cadre du jeu d'engrènement se fasse sans prise mécanique.

2. Dispositif selon la revendication 1,
**caractérisé en ce que**
le diamètre de la denture de la roue d'entrée (24) est plus petit que le diamètre de la denture couplée à l'objet de mesure (10).

3. Dispositif selon la revendication 2,
**caractérisé en ce que**
l'objet de mesure (10) est un objet de mesure rotatif auquel est couplée une roue dentée (22) pour la coopération.

4. Dispositif selon la revendication 2,
**caractérisé en ce que**
l'objet de mesure est un objet de mesure à mouvement linéaire qui couple une denture linéaire pour la coopération mécanique.
